# EUROPÄISCHE PATENTSCHRIFT

(11) **EP 2 949 004 B1**
(45) Veröffentlichungstag und Bekanntmachung des Hinweises auf die Patenterteilung: **14.03.2018**
(21) Anmeldenummer: 14701957.4
(22) Anmeldetag: 22.01.2014
(51) Int. Cl.: H01R 4/18, H01R 43/048, H01R 4/20, H01R 4/02, H01R 43/28, H01R 43/058

(54) **VERFAHREN ZUM HERSTELLEN EINER ELEKTRISCH LEITENDEN VERBINDUNG ZWISCHEN EINER ELEKTRISCHEN LEITUNG UND EINEM ELEKTRISCH LEITENDEN BAUTEIL UND NACH DEM VERFAHREN HERGESTELLTE BAUGRUPPE**
METHOD FOR PRODUCING AN ELECTRICALLY CONDUCTIVE CONNECTION BETWEEN AN ELECTRICAL LINE AND AN ELECTRICALLY CONDUCTIVE COMPONENT, AND MODULE PRODUCED ACCORDING TO THE METHOD
PROCÉDÉ PERMETTANT L'ÉTABLISSEMENT D'UN RACCORDEMENT ÉLECTROCONDUCTEUR ENTRE UNE LIGNE ÉLECTRIQUE ET UN COMPOSANT ÉLECTROCONDUCTEUR, ET BLOC FABRIQUÉ SELON LE PROCÉDÉ

(30) Priorität: 24.01.2013 DE 102013201167
(43) Veröffentlichungstag der Anmeldung: 02.12.2015
(73) Patentinhaber: ElringKlinger AG, 72581 Dettingen (DE)
(72) Erfinder: HÖNLE, Udo, 72108 Rottenburg (DE); LADERER, Mark, 72582 Grabenstetten (DE); BERTSCH, Moritz, 72581 Dettingen/Erms (DE); SAUTER, Ulrich, 72555 Metzingen (DE)
(74) Vertreter: Hoeger, Stellrecht & Partner Patentanwälte mbB
(86) Internationale Anmeldenummer: PCT/EP2014/051244
(87) Internationale Veröffentlichungsnummer: WO 2014/114672

(56) Entgegenhaltungen:
- WO-A1-2008/014981
- DE-U1-202006 008 713
- JP-A- H05 303 983
- JP-U- H0 673 868
- US-A- 2 347 713

## Beschreibung

Die vorliegende Erfindung betrifft ein Verfahren zum Herstellen einer elektrisch leitenden Verbindung zwischen einer elektrischen Leitung, die mehrere Einzelleiter umfasst, und einem elektrisch leitenden Bauteil. Bei bekannten Verfahren dieser Art ist das Crimpelement in Form eines sogenannten B-Crimps ausgebildet, welches einen im Wesentlichen B-förmigen Querschnitt aufweist. Ein solcher B-Crimp weist an seiner geschlossenen Seite eine im Wesentlichen ebene Anlagefläche auf, während an der offenen Seite des B-Crimps zwei in einer Querrichtung des Crimpelements durch eine dazwischenliegende Vertiefung voneinander beabstandete gekrümmte Anlageflächen an der geschlossenen Seite des Crimpelements abgewandten Kuppen des Crimpelements ausgebildet sind.

Ein solcher B-Crimp kann beim stoffschlüssigen Verbinden des Crimpelements mit dem Bauteil in zwei verschiedenen Orientierungen an eine Kontaktfläche des Bauteils angelegt werden, nämlich mit der geschlossenen Seite zum Bauteil gewandt oder mit der offenen Seite zum Bauteil gewandt.

Wenn die geschlossene Seite des B-Crimps zum Bauteil gewandt ist, so wird das Crimpelement längs der gesamten ebenen Anlagefläche seiner geschlossenen Seite stoffschlüssig mit der Kontaktfläche des Bauteils verbunden, beispielsweise verschweißt.

Wenn der B-Crimp mit seiner offenen Seite zum Bauteil gewandt ist, so wird das Crimpelement an den voneinander beabstandeten Anlageflächen an zwei voneinander beabstandeten Kontaktzonen, insbesondere Schweißzonen, stoffschlüssig mit dem Bauteil verbunden, insbesondere verschweißt.

Die Schälkräfte, das heißt die Scherkräfte, die zum Ablösen des Crimpelements von dem Bauteil erforderlich sind, sind bei diesen beiden alternativen Orientierungen des Crimpelements relativ zu dem Bauteil stark unterschiedlich, und zwar sind die Schälkräfte deutlich höher, wenn das Crimpelement mit seiner offenen Seite dem Bauteil zugewandt ist, als bei der Orientierung, bei welcher das Crimpelement mit seiner geschlossenen Seite an dem Bauteil anliegt.

Die Ursache hierfür liegt insbesondere in der stärkeren Lokalisierung der bei der stoffschlüssigen Verbindung in die Kontaktzonen zwischen dem Crimpelement und dem Bauteil eingebrachten Energie (insbesondere bei einer Verschweißung) und in der stärkeren Lokalisierung der angreifenden Scherkräfte auf die Kontaktzonen zwischen dem Crimpelement und dem Bauteil, wenn die Kontaktzonen kleiner sind.

Um höhere Schälkräfte und somit eine stabilere stoffschlüssige Verbindung zwischen dem Crimpelement und dem Bauteil zu erhalten, muss das Crimpelement also stets in der Orientierung an das Bauteil angelegt werden, in welcher die offene Seite des Crimpelements zum Bauteil gewandt ist.

Die US 2 347 713 A offenbart ein Verfahren zum Herstellen einer elektrisch leitenden Verbindung zwischen einer elektrischen Leitung und einem elektrisch leitenden Bauteil gemäß dem Oberbegriff von Anspruch 1.

Die WO 2008/014981 A1 offenbart ein Verfahren zum Verschweißen eines Hülsenteils eines Crimpelements, welcher die Einzelleiter einer elektrischen Leitung abschnittsweise umschließt, mit einem elektrisch leitenden Bauteil.

Die DE 20 2006 008 713 U1 offenbart eine Kontaktklemme, an welche ein Litzenleiter angeklemmt ist und welche zusätzlich eine Lötverbindung zu einem Anschlussstift, der von einem elektrischen und/oder elektronischen Gerät absteht, aufweist.

Der vorliegenden Erfindung liegt die Aufgabe zugrunde, ein Verfahren zum Herstellen einer elektrisch leitenden Verbindung zwischen einer elektrischen

Leitung und einem elektrisch leitenden Bauteil der eingangs genannten Art zu schaffen, welches einfach durchführbar ist und dennoch stets zu einer stabilen stoffschlüssigen Verbindung zwischen dem Crimpelement und dem Bauteil führt.

Diese Aufgabe wird durch ein Verfahren nach Anspruch 1 gelöst.

Der vorliegenden Erfindung liegt somit das Konzept zugrunde, die Geometrie des Crimpelements so zu gestalten, dass die Schälkräfte auch dann ausreichend hoch sind, wenn das Crimpelement mit seiner geschlossenen Seite an das Bauteil angelegt wird.

Durch die beidseitige Verwendungsmöglichkeit des Crimpelements mit der erfindungsgemäßen Geometrie ist dieses Crimpelement und das damit durchgeführte Verfahren zum Herstellen einer elektrisch leitenden Verbindung zwischen einer elektrischen Leitung und einem elektrisch leitenden Bauteil besonders montagefreundlich und fehlertolerant.

Das erfindungsgemäß verwendete Crimpelement kann insbesondere einen Querschnitt aufweisen, welcher der Ziffer 8 ähnelt.

Bei einer besonderen Ausgestaltung des erfindungsgemäßen Verfahrens ist vorgesehen, dass an der geschlossenen Seite des Crimpelements eine Vertiefung erzeugt wird.

Eine solche Vertiefung kann insbesondere durch Einprägen erzeugt werden. Ein solches Einprägen kann beispielsweise mittels eines in einem Crimpwerkzeug vorgesehenen Prägestempels erfolgen, welcher vorzugsweise im Wesentlichen komplementär zu der Vertiefung ausgebildet ist.
Ein Verfahren zum Erzeugen eines Crimpelements aus einer Crimpelement-Vorform mittels eines Crimpwerkzeugs ist beispielsweise in der DE 10 2010 035 424 A1 beschrieben. Bei einer bevorzugten Ausgestaltung der Erfindung ist vorgesehen, dass die Vertiefung sich von einem vorderen Rand des Crimpelements bis zu einem hinteren Rand des Crimpelements erstreckt.

Bei dem erfindungsgemäßen Verfahren ist das Crimpelement vorzugsweise als ein (modifizierter) B-Crimp ausgebildet, welcher eine offene Seite und eine geschlossene Seite aufweist, wobei an der geschlossenen Seite des B-Crimps vorzugsweise eine Vertiefung ausgebildet ist.

Das Crimpelement kann grundsätzlich aus jedem elektrisch leitfähigen, umformbaren Material gebildet sein.

Vorzugsweise ist vorgesehen, dass die Crimpelement-Vorform ein metallisches Material, beispielsweise Kupfer oder eine Kupferlegierung, enthält und vorzugsweise im Wesentlichen vollständig aus einem metallischen Material, insbesondere aus Kupfer oder einer Kupferlegierung, gebildet ist.

Das stoffschlüssige Verbinden des Crimpelements mit dem Bauteil erfolgt vorzugsweise durch einen Schweißvorgang, insbesondere durch einen Ultraschallschweißvorgang.

Bei einer bevorzugten Ausgestaltung des erfindungsgemäßen Verfahrens ist vorgesehen, dass das Bauteil als ein Zellverbinder zum elektrisch leitenden Verbinden von Zellterminals von elektrochemischen Zellen einer elektrochemischen Vorrichtung ausgebildet ist.

Die elektrisch leitende Verbindung zwischen der elektrischen Leitung und einem solchen Zellverbinder kann insbesondere dazu dienen, das an der Verbindungsstelle des Zellverbinders herrschende elektrische Potential über die elektrische Leitung an eine Überwachungsvorrichtung der elektrochemischen Vorrichtung zu übermitteln.

Alternativ oder ergänzend hierzu kann das erfindungsgemäße Verfahren dazu verwendet werden, eine elektrisch leitende Verbindung zwischen einem Temperatursensor und einer Überwachungsvorrichtung der elektrochemischen Vorrichtung herzustellen.

Somit kann durch die elektrisch leitende Verbindung insbesondere eine Einzelzellüberwachung der elektrochemischen Zellen einer elektrochemischen Vorrichtung hinsichtlich Temperatur und/oder Spannung durchgeführt werden.

Die vorliegende Erfindung betrifft ferner eine Baugruppe nach Anspruch 10. Der vorliegenden Erfindung liegt die weitere Aufgabe zugrunde, eine solche Baugruppe so auszubilden, dass sie einfach montierbar ist und dennoch stets eine stabile stoffschlüssige Verbindung zwischen dem Crimpelement und dem Bauteil aufweist.

Diese Aufgabe wird durch eine Baugruppe nach Anspruch 10 gelöst.

Durch diese besondere Geometrie des Crimpelements wird erreicht, dass die Schälkräfte der Verbindung zwischen dem Crimpelement und dem Bauteil auch dann ausreichend hoch sind, wenn das Crimpelement mit seiner geschlossenen Seite an das Bauteil angelegt ist.

Die Ansprüche 11 bis 15 betreffen besondere Ausgestaltungen der erfindungsgemäßen Baugruppe, deren Merkmale und Vorteile bereits vorstehend im Zusammenhang mit besonderen Ausgestaltungen des erfindungsgemäßen Verfahrens erläutert worden sind.

Durch das erfindungsgemäße Verfahren können die Litzen oder Einzelleiter einer elektrischen Leitung durch umschließen von Abschnitten der Einzelleiter mit einem Crimpelement vorkompaktiert werden und das Crimpelement mit einem elektrisch leitendem Bauteil stoffschlüssig verbunden, insbesondere verschweißt werden.

Durch die besondere Geometrie des Crimpelements ist eine beidseitige Verwendung des Crimpelements möglich, wodurch sich gleichmäßigere Schälkräfte, die vorzugsweise im Wesentlichen unabhängig von der Orientierung des Crimpelements relativ zu dem Bauteil sind, ergeben.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische perspektivische Darstellung eines Endbereichs einer elektrischen Leitung, die mehrere Einzelleiter umfasst, welche von einem Crimpelement in Form eines B-Crimps umschlossen sind;
- Fig. 2 und 3: schematische perspektivische Darstellungen, welche die Erzeugung eines Crimpelements aus einer Crimpelement-Vorform an Endabschnitten der Einzelleiter der elektrischen Leitung illustrieren;
- Fig. 4: einen schematischen Schnitt durch eine Baugruppe, welche eine elektrische Leitung mit mehreren Einzelleitern, ein Endabschnitte der Einzelleiter umschließendes Crimpelement in Form eines B-Crimps und ein mit einer geschlossenen Seite des Crimpelements verschweißtes Bauteil umfasst;
- Fig. 5: einen schematischen Schnitt durch eine alternative Ausführungsform der Baugruppe aus Fig. 4, bei welcher das Bauteil mit einer offenen Seite des Crimpelements verschweißt ist;
- Fig. 6: eine schematische perspektivische Darstellung eines Endabschnitts einer elektrischen Leitung, die mehrere Einzelleiter umfasst, und eines die Einzelleiter abschnittsweise umschließenden Crimpelements, dessen geschlossene Seite zwei voneinander beabstandete Anlageflächen aufweist, an denen das Crimpelement mit einer Kontaktfläche eines Bauteils stoffschlüssig verbindbar ist;
- Fig. 7: einen schematischen Schnitt durch eine Baugruppe, welche die elektrische Leitung und das Crimpelement aus Fig. 6 und ein mit dem Crimpelement an dessen offener Seite verschweißtes Bauteil umfasst; und
- Fig. 8: einen schematischen Schnitt durch eine alternative Ausführungsform der Baugruppe aus Fig. 7, bei der das Bauteil mit dem Crimpelement an dessen geschlossener Seite verschweißt ist.

Gleiche oder funktional äquivalente Elemente sind in allen Figuren mit denselben Bezugszeichen bezeichnet.

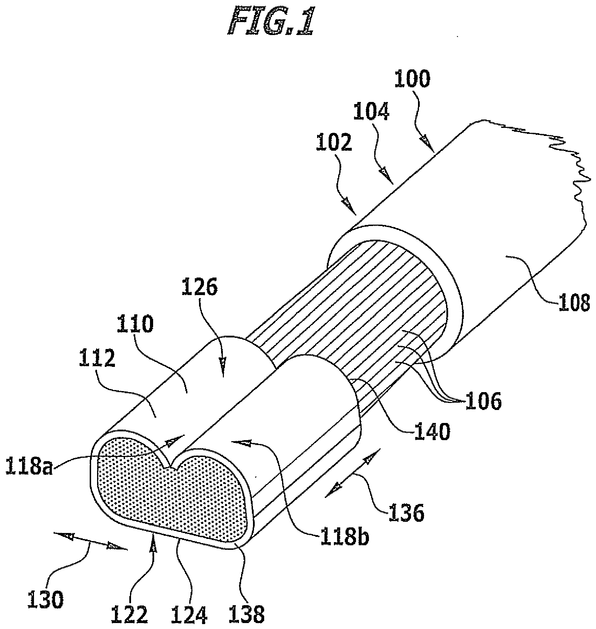

Eine in den Fig. 1 bis 5 dargestellte, als Ganzes mit 100 bezeichnete Baugruppe nach dem Stand der Technik umfasst eine elektrische Leitung 102 in Form eines Kabels 104, welche eine Vielzahl von Litzen oder Einzelleitern 106 und eine elektrisch isolierende Umhüllung 108 umfasst, ein Crimpelement 110 in Form eines B-Crimps 112, welches Endabschnitte der Einzelleiter 106 umschließt, und ein Bauteil 114 aus einem elektrisch leitfähigen Material (siehe insbesondere die Fig. 1, 4 und 5).

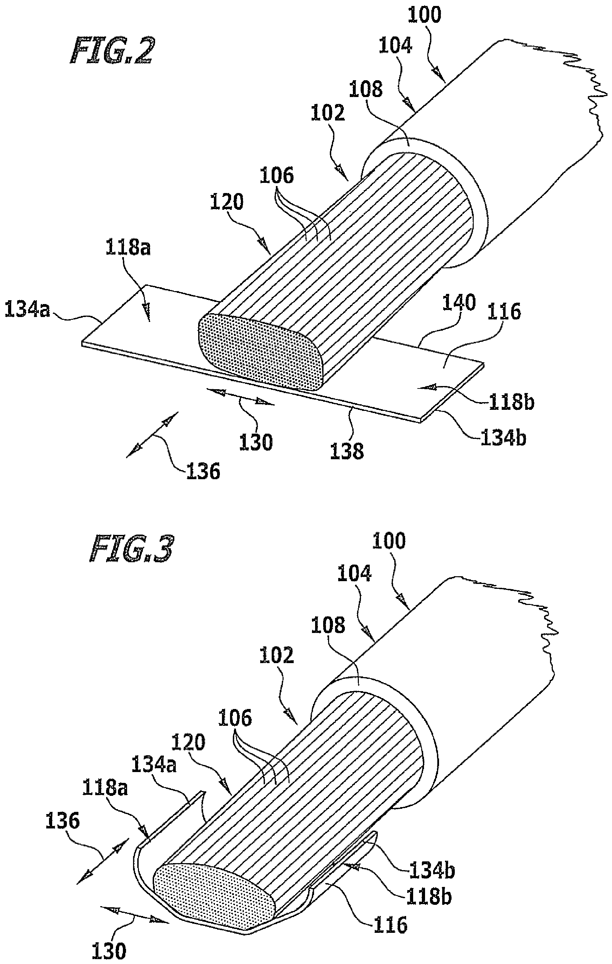

Das Crimpelement 110 ist aus einer in Fig. 2 dargestellten Crimpelement-Vorform 116 dadurch erzeugt worden, dass mittels eines (nicht dargestellten) Crimpwerkzeugs einander entgegengesetzte Randbereiche 118a, 118b um die nicht mit der Umhüllung 108 versehenen Endabschnitte 120 der Einzelleiter 106 herumgebogen und so gegen die Einzelleiter 106 verpresst werden, dass das Crimpelement 110 mit dem in den Fig. 1, 4 und 5 dargestellten, im Wesentlichen B-förmigen Querschnitt entsteht.

Während der Erzeugung des Crimpelements 110 werden die vom Crimpelement 110 umschlossenen Endabschnitte 120 der Einzelleiter 106 kompaktiert und kraftschlüssig miteinander verpresst.

Das so gebildete Crimpelement 110 weist eine geschlossene Seite 122 mit einer durchgehenden, im Wesentlichen ebenen Anlagefläche 124 und eine der geschlossenen Seite 122 gegenüberliegende, im Folgenden als offene Seite 126 bezeichnete Seite auf, an welcher die gekrümmten Randbereiche 118a und 118b des Crimpelements 110 einander gegenüberliegen.

Vorzugsweise ist dabei vorgesehen, dass die Randbereiche 118a und 118b in einem kleinen Abstand voneinander enden oder einander berühren.

Die der geschlossenen Seite 122 des Crimpelements 110 abgewandten Kuppen der Randbereiche 118a und 118b bilden zwei Anlageflächen 128a beziehungsweise 128b der offenen Seite 126 des Crimpelements 110, welche in einer Querrichtung 130 des Crimpelements 110 durch eine dazwischenliegende Vertiefung 132 voneinander beabstandet sind.

Den Grund der Vertiefung 132 bilden beispielsweise die freien Ränder 134a und 134b der Randbereiche 118a beziehungsweise 118b des Crimpelements 110.

Die Querrichtung 130 des Crimpelements 110 ist senkrecht zu einer Längsrichtung 136 des Crimpelements 110 ausgerichtet, welche im Wesentlichen parallel zur Längsrichtung der elektrischen Leitung und im Wesentlichen parallel zu den freien Rändern 134a und 134b des Crimpelements 110 verläuft.

Die seitlichen freien Ränder 134 des Crimpelements 110 verbinden einen vorderen Rand 138 mit einem hinteren Rand 140 des Crimpelements 110.

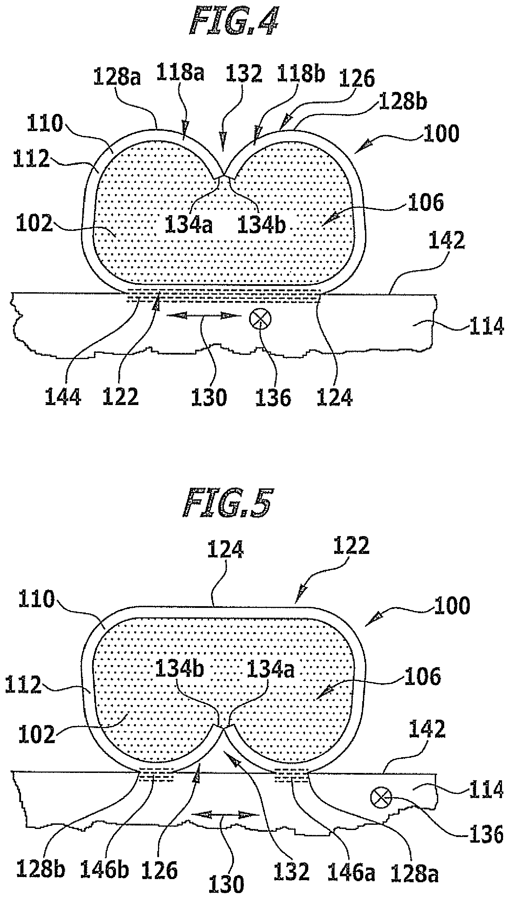

Zum stoffschlüssigen Verbinden des Crimpelements 110 mit dem Bauteil 114 kann das Crimpelement 110 in zwei verschiedenen Orientierungen an eine Kontaktfläche 142 des Bauteils 114 angelegt werden, nämlich mit der geschlossenen Seite 122 zum Bauteil 114 gewandt, wie in Fig. 4 dargestellt, oder mit der offenen Seite 126 zum Bauteil 114 gewandt, wie in Fig. 5 dargestellt. Im Falle der in Fig. 4 dargestellten Orientierung wird das Crimpelement 110 längs der gesamten ebenen Anlagefläche 124 der geschlossenen Seite 122 unter Bildung einer Schweißzone 144 verschweißt, beispielsweise durch einen Ultraschallschweißvorgang.

Im Falle der in Fig. 5 dargestellten alternativen Orientierung wird das Crimpelement 110 an den voneinander beabstandeten Anlageflächen 128a und 128b unter Bildung zweier in der Querrichtung 130 voneinander beabstandeter Schweißzonen 146a und 146b verschweißt, beispielsweise durch einen Ultraschallschweißvorgang.

Die Schälkräfte, das heißt die Scherkräfte, die zum Ablösen des Crimpelements 110 von dem Bauteil 114 erforderlich sind, sind bei den beiden alternativen Ausführungsformen der stoffschlüssigen Verbindung gemäß den Fig. 4 und 5 stark unterschiedlich, und zwar sind die Schälkräfte bei der in Fig. 5 dargestellten Ausführungsvariante, bei welcher das Crimpelement 110 mit seiner offenen Seite 126 dem Bauteil 114 zugewandt ist, deutlich höher als bei der in Fig. 4 dargestellten Ausführungsvariante, bei welcher das Crimpelement 110 mit seiner geschlossenen Seite 122 an dem Bauteil 114 anliegt.

Die Ursache hierfür liegt insbesondere in der stärkeren Lokalisierung der bei der stoffschlüssigen Verbindung zwischen dem Crimpelement 110 und dem Bauteil 114 in die Schweißzonen 146a, 146b eingebrachten Energie und in der stärkeren Lokalisierung der angreifenden Scherkräfte auf die Schweißzonen 146a, 146b bei der in Fig. 5 dargestellten Orientierung des Crimpelements 110 relativ zu dem Bauteil 114.

Da höhere Schälkräfte eine stabilere und haltbarere Verbindung zwischen dem Crimpelement 110 und dem Bauteil 114 bedeuten, muss das Crimpelement 110 also in der in Fig. 5 dargestellten Orientierung an das Bauteil 114 angelegt werden, um höhere Schälkräfte und somit eine stabilere stoffschlüssige Verbindung zwischen dem Crimpelement 110 und dem Bauteil 114 zu erhalten.

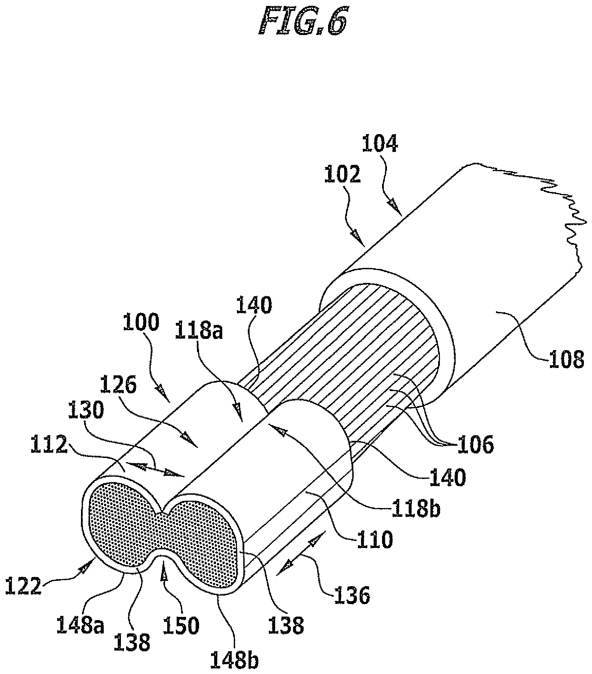

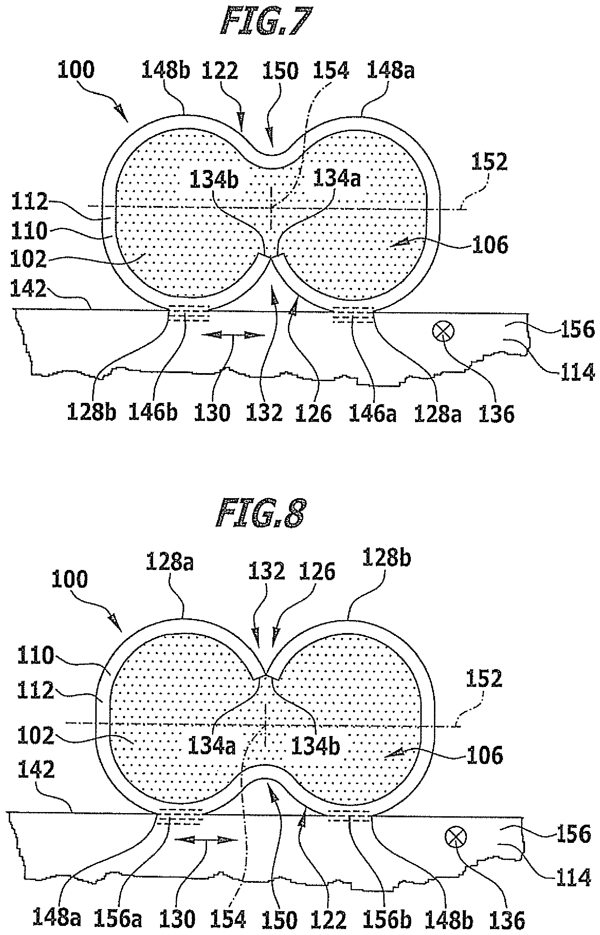

Bei der in den Fig. 6 bis 8 dargestellten, erfindungsgemäß ausgebildeten Baugruppe 100 aus einer elektrischen Leitung 102 mit Einzelleitern 106, einem Crimpelement 110 und einem Bauteil 114 sind die Schälkräfte hingegen stets im Wesentlichen gleich groß, unabhängig davon, ob das Crimpelement 110 nun mit seiner offenen Seite 126 an das Bauteil 114 angelegt wird, wie in Fig. 7 dargestellt, oder mit seiner geschlossenen Seite 122, wie in Fig. 8 dargestellt.

Dies wird dadurch erreicht, dass das Crimpelement 110 derart erzeugt wird, dass auch die geschlossene Seite 122 des Crimpelements 110 zwei voneinander beabstandete Anlageflächen 148a und 148b aufweist, an denen das Crimpelement 110 mit der Kontaktfläche 142 des Bauteils 114 stoffschlüssig verbindbar ist, wobei die Anlageflächen 148a und 148b in der Querrichtung 130 des Crimpelements 110 durch eine dazwischen angeordnete Vertiefung 150 voneinander getrennt sind.

Die Vertiefung 150 erstreckt sich vorzugsweise von dem vorderen Rand 138 des Crimpelements 110 bis zu dessen hinterem Rand 140.

Die Vertiefung 150 wird vorzugsweise beim Crimpvorgang, das heißt bei der Erzeugung des Crimpelements 110 aus der Crimpelement-Vorform 116, erzeugt, beispielsweise durch Einprägung.

Die Einprägung kann beispielsweise mittels eines im Crimpwerkzeug vorgesehenen Prägestempels erfolgen, welcher vorzugsweise im Wesentlichen komplementär zu der Vertiefung 150 ausgebildet ist.

Vorzugsweise weist das Crimpelement 110 im Bereich der Anlageflächen 148a und 148b der geschlossenen Seite 122 des Crimpelements 110 im Wesentlichen denselben Krümmungsradius auf wie an den Anlageflächen 128a beziehungsweise 128b der offenen Seite 126 des Crimpelements 110.

Besonders günstig ist es, wenn das Crimpelement 110 hinsichtlich der Anlageflächen 148a, 148b der geschlossenen Seite 122 des Crimpelements 110 und der Anlageflächen 128a, 128b der offenen Seite 126 des Crimpelements 110 im Wesentlichen spiegelsymmetrisch bezüglich einer parallel zur Querrichtung 130 und parallel zur Längsrichtung 136 des Crimpelements 110 ausgerichteten Längsmittelebene 152 des Crimpelements 110 und/oder im Wesentlichen rotationssymmetrisch bezüglich einer Drehung des Crimpelements 110 um 180° um eine parallel zur Längsrichtung 136 verlaufende Längsmittelachse 154 des Crimpelements 110 ist.

Hierdurch wird erreicht, dass das Crimpelement 110 auch dann, wenn es mit seiner geschlossenen Seite 122 an das Bauteil 114 angelegt wird, an zwei in der Querrichtung 130 des Crimpelements 110 voneinander beabstandeten Schweißzonen 156a und 156b stoffschlüssig mit dem Bauteil 114 verbunden wird, beispielsweise durch einen Ultraschallschweißvorgang.

Die Schweißzonen 156a und 156b, welche die stoffschlüssige Verbindung zwischen dem Crimpelement 110 und dem Bauteil 114 bewirken, wenn das Crimpelement 110 mit seiner geschlossenen Seite 122 an das Bauteil 114 angelegt wird, haben also im Wesentlichen dieselbe Geometrie wie die Schweißzonen 146a und 146b, welche die stoffschlüssige Verbindung zwischen dem Crimpelement 110 und dem Bauteil 114 bewirken, wenn das Crimpelement 110 mit seiner offenen Seite 126 an das Bauteil 114 angelegt wird, wie dies in Fig. 7 dargestellt ist.

Bei Verwendung des erfindungsgemäß ausgebildeten Crimpelements 110 sind somit die Schälkräfte unabhängig von der Lage des Crimpelements 110 in Bezug auf das Bauteil 114 im Wesentlichen gleich groß, so dass bei der Verbindung des Crimpelements 110 mit dem Bauteil 114 nicht darauf geachtet werden muss, ob das Crimpelement 110 nun mit der offenen Seite 126 oder mit der geschlossenen Seite 122 an dem Bauteil 114 anliegt.

Hierdurch wird eine deutliche Vereinfachung der Montagearbeiten erzielt.

Im Gegensatz zu dem im Wesentlichen B-förmigen Crimpelement 110 gemäß dem Stand der Technik, wie es in den Fig. 1 bis 5 dargestellt ist, weist das in den Fig. 6 bis 8 dargestellte erfindungsgemäße Crimpelement 110 einen Querschnitt auf, welcher der Ziffer 8 ähnelt.

Abgesehen von der zusätzlichen Einprägung der Vertiefung 150 an der geschlossenen Seite 122 des Crimpelements 110 stimmt die Herstellung des Crimpelements 110 mit dem Herstellungsverfahren gemäß dem Stand der Technik, wie es vorstehend unter Bezugnahme auf die Fig. 1 bis 5 erläutert worden ist, überein.

Als Material für die Crimpelement-Vorform 116 kommt grundsätzlich jedes elektrisch leitfähige, umformbare Material in Betracht.

Vorzugsweise ist die Crimpelement-Vorform 116 aus einem metallischen Material, beispielsweise aus Kupfer oder einer Kupferlegierung, gebildet.

Auch die Einzelleiter 106 der elektrischen Leitung 102 können grundsätzlich aus jedem Material gebildet sein, das eine ausreichende elektrische Leitfähigkeit aufweist.

Insbesondere kann vorgesehen sein, dass die Einzelleiter 106 aus Kupfer oder einer Kupferlegierung gebildet sind.

Das Bauteil 114 kann grundsätzlich aus jedem Material gebildet sein, das eine ausreichende elektrische Leitfähigkeit aufweist.

Das Bauteil 114 ist vorzugsweise ein Bestandteil eines Zellkontaktierungssystems, mit welchem Zellterminals von elektrochemischen Zellen einer elektrochemischen Vorrichtung miteinander verbunden werden.

Insbesondere kann vorgesehen sein, dass das Bauteil 114 ein Zellverbinder 156 ist, welcher zum elektrisch leitenden Verbinden von Zellterminals verschiedener elektrochemischer Zellen einer elektrochemischen Vorrichtung dient.

Ein solcher Zellverbinder 156 ist vorzugsweise aus einem elektrisch leitenden metallischen Material gebildet, beispielsweise aus Kupfer oder einer Kupferlegierung oder aus Aluminium oder einer Aluminiumlegierung.

Die elektrisch leitende Verbindung zwischen der elektrischen Leitung 102 und einem solchen Zellverbinder 156 kann insbesondere dazu dienen, das an der Verbindungsstelle des Zellverbinders 156 herrschende elektrische Potential über die elektrische Leitung 102 an eine Überwachungsvorrichtung der elektrochemischen Vorrichtung zu übermitteln.

Ferner kann eine erfindungsgemäße Baugruppe 100 der vorstehend beschriebenen Art dazu verwendet werden, eine elektrisch leitende Verbindung zwischen einem Temperatursensor und einer Überwachungsvorrichtung der elektrochemischen Vorrichtung herzustellen.

## Patentansprüche

1. Verfahren zum Herstellen einer elektrisch leitenden Verbindung zwischen einer elektrischen Leitung (102), die mehrere Einzelleiter (106) umfasst, und einem elektrisch leitenden Bauteil (114), umfassend folgende Verfahrensschritte:
- Erzeugen eines die Einzelleiter (106) abschnittsweise umschließenden Crimpelements (110) aus einer Crimpelement-Vorform (116), wobei das Crimpelement (110) eine geschlossene Seite (122) und eine offene Seite (126), an der Randbereiche (118a, 118b) des Crimpelements (110) einander gegenüberliegen, aufweist;
wobei das Crimpelement (110) derart erzeugt wird, dass die offene Seite (126) des Crimpelements (110) zwei in einer Querrichtung (130) des Crimpelements (110) voneinander beabstandete Anlageflächen (128a, 128b) aufweist und
dass die geschlossene Seite (122) des Crimpelements (110) zwei voneinander beabstandete Anlageflächen (148a, 148b) aufweist,
**dadurch gekennzeichnet,**
**dass** das Verfahren zusätzlich Folgendes umfasst:
- stoffschlüssiges Verbinden des Crimpelements (110) an den Anlageflächen (148a, 148b) der geschlossenen Seite (122) oder an den Anlageflächen (128a, 128b) der offenen Seite (126) mit einer Kontaktfläche (142) des Bauteils (114).

2. Verfahren nach Anspruch 1, **dadurch gekennzeichnet, dass** an der geschlossenen Seite (122) des Crimpelements (110) eine Vertiefung (150) erzeugt wird.

3. Verfahren nach Anspruch 2, **dadurch gekennzeichnet, dass** die Vertiefung (150) durch Einprägen erzeugt wird.

4. Verfahren nach einem der Ansprüche 2 oder 3, **dadurch gekennzeichnet, dass** die Vertiefung (150) sich von einem vorderen Rand (138) des Crimpelements (110) bis zu einem hinteren Rand (140) des Crimpelements (110) erstreckt.

5. Verfahren nach einem der Ansprüche 1 bis 4, **dadurch gekennzeichnet, dass** das Crimpelement (110) als ein B-Crimp (112) ausgebildet ist.

6. Verfahren nach einem der Ansprüche 1 bis 5, **dadurch gekennzeichnet, dass** die Crimpelement-Vorform (116) ein metallisches Material enthält.

7. Verfahren nach einem der Ansprüche 1 bis 6, **dadurch gekennzeichnet, dass** das stoffschlüssige Verbinden des Crimpelements (110) mit dem Bauteil (114) durch einen Schweißvorgang erfolgt.

8. Verfahren nach einem der Ansprüche 1 bis 7, **dadurch gekennzeichnet, dass** das stoffschlüssige Verbinden des Crimpelements (110) mit dem Bauteil (114) durch einen Ultraschallschweißvorgang erfolgt.

9. Verfahren nach einem der Ansprüche 1 bis 8, **dadurch gekennzeichnet, dass** das Bauteil (114) als ein Zellverbinder (156) zum elektrisch leitenden Verbinden von Zellterminals von elektrochemischen Zellen einer elektrochemischen Vorrichtung ausgebildet ist.

10. Baugruppe, umfassend
eine elektrische Leitung (102), die mehrere Einzelleiter (106) umfasst, ein die Einzelleiter (106) abschnittsweise umschließendes Crimpelement (110), das eine geschlossene Seite (122) und eine offene Seite (126), an der Randbereiche (118a, 118b) des Crimpelements (110) einander gegenüberliegen, aufweist, und
ein elektrisch leitend und stoffschlüssig mit dem Crimpelement (110) verbundenes Bauteil (114),
wobei die offene Seite (126) des Crimpelements (110) zwei in einer Querrichtung (130) des Crimpelements (110) voneinander beabstandete Anlageflächen (128a, 128b) aufweist und die geschlossene Seite (122) des Crimpelements (110) zwei voneinander beabstandete Anlageflächen (148a, 148b) aufweist,
**dadurch gekennzeichnet,**
**dass** das Crimpelement (110) an den Anlageflächen (148a, 148b) der geschlossenen Seite (122) oder an den Anlageflächen (128a, 128b) der offenen Seite (126) mit einer Kontaktfläche (142) des Bauteils (114) stoffschlüssig verbunden ist.

11. Baugruppe nach Anspruch 10, **dadurch gekennzeichnet, dass** die zwei Anlageflächen (148a, 148b) an der geschlossenen Seite (122) des Crimpelements (110) durch eine Vertiefung (150) voneinander getrennt sind.

12. Baugruppe nach Anspruch 11, **dadurch gekennzeichnet, dass** die Vertiefung (150) sich von einem vorderen Rand (138) des Crimpelements (110) bis zu einem hinteren Rand (140) des Crimpelements (110) erstreckt.

13. Baugruppe nach einem der Ansprüche 10 bis 12, **dadurch gekennzeichnet, dass** das Crimpelement (110) als ein B-Crimp (112) ausgebildet ist.

14. Baugruppe nach einem der Ansprüche 10 bis 13, **dadurch gekennzeichnet, dass** das Crimpelement (110) mit dem Bauteil (114) verschweißt ist.

15. Baugruppe nach einem der Ansprüche 10 bis 14, **dadurch gekennzeichnet, dass** das Bauteil (114) ein Zellverbinder (156) zum elektrisch leitenden Verbinden von Zellterminals von elektrochemischen Zellen einer elektrochemischen Vorrichtung ist.

## Claims

1. A method for producing an electrically conductive bond between an electrical line (102), which comprises a plurality of individual conductors (106), and an electrically conductive component (114), comprising the following method steps:
- producing from a crimp element blank (116) a crimp element (110) enclosing portions of the individual conductors (106), the crimp element (110) comprising a continuous side (122) and a discontinuous side (126), at which edge regions (118a, 118b) of the crimp element (110) lie opposite one another;
wherein the crimp element (110) is produced in such a way that the discontinuous side (126) of the crimp element (110) comprises two bearing surfaces (128a, 128b) which are spaced from one another in a transverse direction (130) of the crimp element (110) and
that the continuous side (122) of the crimp element (110) comprises two bearing surfaces (148a, 148b) which are spaced from one another,
**characterised in that**
the method in addition comprises the following:
- substance-to-substance bording of the crimp element (110) at the bearing surfaces (148a, 148b) of the continuous side (122) or at the bearing surfaces (128a, 128b) of the discontinuous side (126) with a contact surface (142) of the component (114).

2. A method according to claim 1, **characterised in that** a recess (150) is produced on the continuous side (122) of the crimp element (110).

3. A method according to claim 2, **characterised in that** the recess (150) is produced by impressing.

4. A method according to one of claims 2 or 3, **characterised in that** the recess (150) extends from a front edge (138) of the crimp element (110) as far as a rear edge (140) of the crimp element (110).

5. A method according to one of claims 1 to 4, **characterised in that** the crimp element (110) takes the form of a B-crimp (112).

6. A method according to one of claims 1 to 5, **characterised in that** the crimp element blank (116) contains a metallic material.

7. A method according to one of claims 1 to 6, **characterised in that** substance-to-substance bonding of the crimp element (110) with the component (114) proceeds by a welding process.

8. A method according to one of claims 1 to 7, **characterised in that** substance-to-substance bonding of the crimp element (110) with the component (114) proceeds by an ultrasonic welding process.

9. A method according to one of claims 1 to 8, **characterised in that** the component (114) is formed as a cell connector (156) for electrically conductively connecting cell terminals of electrochemical cells of an electrochemical device.

10. An assembly, comprising
an electrical line (102), which comprises a plurality of individual conductors (106), a crimp element (110) enclosing portions of the individual conductors (106) and having a continuous side (122) and a discontinuous side (126), at which edge regions (118a, 118b) of the crimp element (110) lie opposite one another, and
an electrically conductive component (114) substance-to-substance bonded to the crimp element (110),
wherein the discontinuous side (126) of the crimp element (110) comprises two bearing surfaces (128a, 128b) which are spaced from one another in a transverse direction (130) of the crimp element (110) and the continuous side (122) of the crimp element (110) comprises two bearing surfaces (148a, 148b) which are spaced from one another,
**characterised in that**
the crimp element is connected by a substance-to-substance bond at the bearing surfaces (148a, 148b) of the continuous side (122) or at the bearing surfaces (128a, 128b) of the discontinuous side (126) with a contact surface (142) of the component (114).

11. An assembly according to claim 10, **characterised in that** the two bearing surfaces (148a, 148b) on the continuous side (122) of the crimp element (110) are separated from one another by a recess (150).

12. An assembly according to claim 11, **characterised in that** the recess (150) extends from a front edge (138) of the crimp element (110) as far as a rear edge (140) of the crimp element (110).

13. An assembly according to one of claims 10 to 12, **characterised in that** the crimp element (110) takes the form of a B-crimp (112).

14. An assembly according to one of claims 10 to 13, **characterised in that** the crimp element (110) is welded together with the component (114).

15. An assembly according to one of claims 10 to 14, **characterised in that** the component (114) is a cell connector (156) for electrically conductively bonding cell terminals of electrochemical cells of an electrochemical device.

## Revendications

1. Procédé servant à fabriquer une liaison électroconductrice entre une ligne électrique (102), qui comprend plusieurs conducteurs individuels (106), et un composant (114) électroconducteur, comprenant les étapes de procédé suivantes :
- la production d'un élément de sertissage (110) entourant par endroits les conducteurs individuels (106) à partir d'une préforme d'élément de sertissage (116), dans lequel l'élément de sertissage (110) présente un côté fermé (122) et un côté ouvert (126), au niveau duquel des zones de bord (118a, 118b) de l'élément de sertissage (110) se font face les unes les autres ;
dans lequel l'élément de sertissage (110) est produit de telle manière que le côté ouvert (126) de l'élément de sertissage (110) présente deux surfaces d'appui (128a, 128b) espacées l'une de l'autre dans une direction transversale (130) de l'élément de sertissage (110), et
que le côté fermé (122) de l'élément de sertissage (110) présente deux surfaces d'appui (148a, 148b) espacées l'une de l'autre,
**caractérisé en ce**
**que** le procédé comprend en supplément ce qui suit :
- la liaison par liaison de matière de l'élément de sertissage (110) au niveau des surfaces d'appui (148a, 148b) du côté fermé (122) ou au niveau des surfaces d'appui (128a, 128b) du côté ouvert (126) à une surface de contact (142) du composant (114).

2. Procédé selon la revendication 1, **caractérisé en ce qu'**un renfoncement (150) est produit au niveau du côté fermé (122) de l'élément de sertissage (110).

3. Procédé selon la revendication 2, **caractérisé en ce que** le renfoncement (150) est produit par incrustation.

4. Procédé selon l'une quelconque des revendications 2 ou 3, **caractérisé en ce que** le renfoncement (150) s'étend depuis un bord avant (138) de l'élément de sertissage (110) jusqu'à un bord arrière (140) de l'élément de sertissage (110).

5. Procédé selon l'une quelconque des revendications 1 à 4, **caractérisé en ce que** l'élément de sertissage (110) est réalisé sous la forme d'un connecteur de sertissage de type B (112).

6. Procédé selon l'une quelconque des revendications 1 à 5, **caractérisé en ce que** la préforme d'élément de sertissage (116) contient un matériau métallique.

7. Procédé selon l'une quelconque des revendications 1 à 6, **caractérisé en ce que** l'assemblage par liaison de matière de l'élément de sertissage (110) au composant (114) est effectué par une opération de soudage.

8. Procédé selon l'une quelconque des revendications 1 à 7, **caractérisé en ce que** l'assemblage par liaison de matière de l'élément de sertissage (110) au composant (114) est effectué par une opération de soudage par ultrasons.

9. Procédé selon l'une quelconque des revendications 1 à 8, **caractérisé en ce que** le composant (114) est réalisé sous la forme d'un connecteur de cellules (156) servant à assembler de manière électroconductrice des terminaux de cellules de cellules électrochimiques d'un dispositif électrochimique.

10. Module comprenant
une ligne électrique (102), qui comprend plusieurs conducteurs individuels (106), un élément de sertissage (110) entourant par endroits les conducteurs individuels (106), lequel élément de sertissage présente un côté fermé (122) et un côté ouvert (126), au niveau duquel des zones de bord (118a, 118b) de l'élément de sertissage (110) se font face les unes les autres, et
un composant (114) assemblé de manière électroconductrice et par liaison de matière à l'élément de sertissage (110),
dans lequel le côté ouvert (126) de l'élément de sertissage (110) présente deux surfaces d'appui (128a, 128b) espacées l'une de l'autre dans une direction transversale (130) de l'élément de sertissage (110) et le côté fermé (122) de l'élément de sertissage (110) présente deux surfaces d'appui (148a, 148b) espacées l'une de l'autre,
**caractérisé en ce**
**que** l'élément de sertissage (110) est assemblé par liaison de matière à une surface de contact (142) du composant (114) au niveau des surfaces d'appui (148a, 148b) du côté fermé (122) ou au niveau des surfaces d'appui (128a, 128b) du côté ouvert (126).

11. Module selon la revendication 10, **caractérisé en ce que** les deux surfaces d'appui (148a, 148b) sont séparées l'une de l'autre par un renfoncement (150) au niveau du côté fermé (122) de l'élément de sertissage (110).

12. Module selon la revendication 11, **caractérisé en ce que** le renfoncement (150) s'étend depuis un bord avant (138) de l'élément de sertissage (110) jusqu'à un bord arrière (140) de l'élément de sertissage (110).

13. Module selon l'une quelconque des revendications 10 à 12, **caractérisé en ce que** l'élément de sertissage (110) est réalisé sous la forme d'un connecteur de sertissage de type B (112).

14. Module selon l'une quelconque des revendications 10 à 13, **caractérisé en ce que** l'élément de sertissage (110) est assemblé par soudage au composant (114).

15. Module selon l'une quelconque des revendications 10 à 14, **caractérisé en ce que** le composant (114) est un connecteur de cellules (156) servant à assembler de manière électroconductrice des terminaux de cellules de cellules électrochimiques d'un dispositif électrochimique.
